**Europäisches Patentamt**

**European Patent Office**

**Office européen des brevets**

(19)

(11) Numéro de publication: **0 130 858**
**B1**

(12) # FASCICULE DE BREVET EUROPEEN

(45) Date de publication du fascicule du brevet:
**28.10.87**

(51) Int. Cl.⁴: **A 01 F 15/00**

(21) Numéro de dépôt: **84400991.0**

(22) Date de dépôt: **16.05.84**

(54) **Dispositif de relevage pour des machines destinées au ramassage et au pressage en balles rondes de tous types de récolte.**

(30) Priorité: **27.05.83 FR 8308863**

(43) Date de publication de la demande:
**09.01.85 Bulletin 85/2**

(45) Mention de la délivrance du brevet:
**28.10.87 Bulletin 87/44**

(84) Etats contractants désignés:
**BE DE GB IT NL SE**

(56) Documents cités:
**DE - A - 2 219 976**
**US - A - 3 895 573**
**US - A - 3 968 633**

(73) Titulaire: **HESSTON Société anonyme dite:, Division Coex, F-85220 - Coex (FR)**

(72) Inventeur: **Rossato, Charles L., 82, route des Sables, Landeville F-85220 Coex (FR)**
Inventeur: **Renaud, Loic M., Commequiers, F-85220 - Coex (FR)**

(74) Mandataire: **Moulines, Pierre et al, Cabinet BEAU de LOMENIE 55, rue d'Amsterdam, F-75008 Paris (FR)**

## Description

La présente invention a pour objet un dispositif de relevage pour des machines destinées au ramassage et au pressage en balles rondes de tous types de récolte.

On connaît des machines agricoles qui assurent le ramassage du foin ou de la paille sur le sol et son pressage dans une chambre pour la formation d'une balle ronde ou cylindrique qui est ensuite liée et éjectée. Ces machines comprennent un châssis se déplaçant sur le sol au moyen de deux roues et sur lequel est monté rotatif à sa partie inférieure un organe de ramassage du foin coupé, ledit châssis portant à sa partie supérieure des moyens délimitant une chambre de formation de balles rondes de foin.

Un tel dispositif est illustré notamment dans le brevet US-A 3 895 573. Pour tenir compte de conditions d'utilisation pour des terrains, ou des récoltes, de caractéristiques variables, on a déjà proposé de monter l'organe de ramassage oscillant par rapport au châssis afin de pouvoir faire varier sa hauteur au-dessus du sol. Cette solution conduit à des inconvénients lorsque la chambre de formation de balle comprend à sa partie inférieure un rouleau porteur de balle et un rouleau de bas de porte.

En effet, lors des variations de hauteur de l'organe de ramassage, l'entrée du produit vers la chambre via le rouleau porteur de balle et le rouleau de bas de porte diminue, ce qui réduit les performances de la machine.

Par ailleurs, on connaît du document DE-A 2 219 976 une machine dans laquelle les roues sont montées sur le châssis par un moyen de réglage en hauteur du châssis, ce qui permet d'incliner celui-ci vers l'arrière au moment de déchargement d'une balle terminée.

Cependant, dans ce document, l'organe de ramassage a un montage oscillant classique et le moyen de réglage en hauteur du châssis ne permet pas, en termes de structures, de fonction ou de résultat, d'assurer une variation en hauteur de l'organe de ramassage au dessus du sol.

Par rapport à ces solutions connues, la présente invention concerne un dispositif de relevage pour des machines destinées au ramassage et au pressage en balles rondes de tous types de récolte, ladite machine comprenant un châssis, une chambre de formation de balles rondes définie à la partie supérieure du châssis, un rouleau porteur de balle et un rouleau de bas de porte montés sur le châssis à la partie inférieure de la chambre de formation de balle, un organe de ramassage de foin coupé monté rotatif à la partie inférieure du châssis, le châssis étant monté sur une paire de roues en contact avec le sol et situées derrière l'organe de ramassage caractérisé en ce que l'organe de ramassage est monté en position fixe par rapport au rouleau porteur et au rouleau de bas de porte, de telle sorte que l'organe de ramassage est fixe par rapport à la chambre de formation de balle et en ce que chaque roue est montée rotative sur une fusée fixée sur la partie médiane d'un bras monté pivotant à une extrémité sur la partie inférieure du châssis et à l'autre extrémité à un vérin hydraulique, les joints d'articulation du bras sur le châssis et sur le vérin et le point de fixation de la fusée sur le bras étant disposés aux sommets d'un triangle, le vérin étant articulé à une de ses extrémités sur le bras et à son autre extrémité sur le châssis au-dessus de l'axe de pivotement du bras, formant ainsi un moyen de réglage en hauteur du châssis et de l'organe de ramassage par rapport au sol.

Ce dispositif permet d'obtenir un volume d'entrée du produit à enrouler qui est constant, ce qui assure un rendement optimal, ce volume constant étant obtenu par la position fixe de l'organe de ramassage du rouleau porteur et du rouleau de bas de porte.

L'organe de ramassage étant fixe par rapport à la chambre de formation de la balle, la capacité d'alimentation ne varie pas, quelle que soit la hauteur des dents de l'organe de ramassage par rapport au sol en position de travail. En effet, le réglage de la hauteur des dents s'effectue en relevant ou en abaissant hydrauliquement l'ensemble de la machine.

Par ailleurs, le dispositif suivant l'invention permet de ramasser des andains avec la machine en position de transport lorsque la machine est utilisée en terrain très humide (par exemple pour le ramassage de la paille de riz), sans diminuer la capacité de ramassage et sans effectuer de modifications spéciales sur la machine.

D'autres caractéristiques et avantages de l'invention seront mieux compris à la lecture de la description qui va suivre d'un mode de réalisation et en se référant aux dessins annexés, sur lesquels:

la fig. 1 est une vue en élévation et en coupe d'un mode de réalisation d'une machine à ramasser et à presser le foin en balle ronde suivant l'invention, en position de travail;

la fig. 2 est une même vue de la machine en position de transport sur route;

la fig. 3 est une vue en élévation du dispositif de relevage et de verrouillage des roues par rapport au châssis.

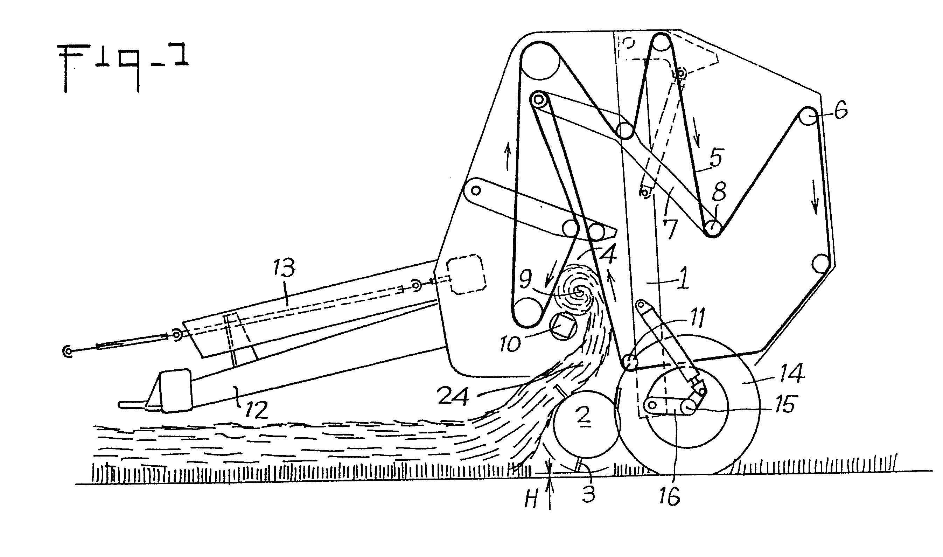

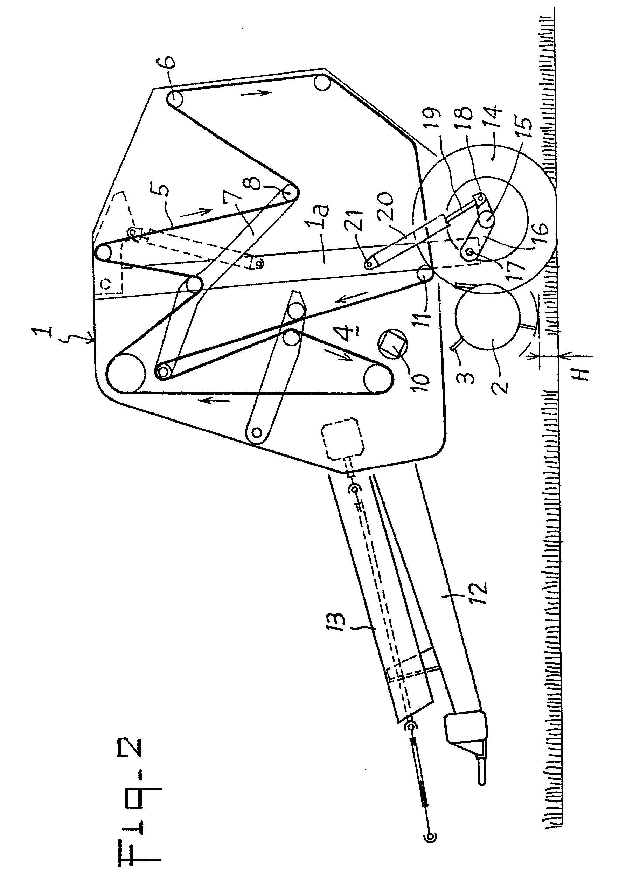

Aux figures 1 et 2, on a représenté une machine destinée au ramassage et au pressage de balles de foin rondes ou cylindriques et qui comprend un châssis 1 sur lequel est monté rotatif à sa partie inférieure un organe de ramassage du foin constitué d'un cylindre 2 qui est muni sur son pourtour de dents 3.

A sa partie supérieure, le châssis 1 porte des moyens délimitant une chambre 4 de formation d'une balle de foin ronde 9, lesdits moyens étant constitués d'une bande flexible ou de plusieurs lanières plates sans fin 5 entraînées en translation et guidées par des rouleaux tels que 6 dont certains 8 sont montés sur des leviers 7 articulés sur le bâti afin de permettre le déplacement desdits rouleaux au fur et à mesure de l'enroulement de la balle 9 et de l'augmentation du volume de la chambre 4 et de la balle 9.

A la partie inférieure de la chambre 4 sont disposés un rouleau porteur 10 de la balle et un rouleau de bas de porte 11.

Conformément à l'invention, l'organe de ramassage 2, 3 a une position fixe par rapport au rouleau porteur 10 et au rouleau de bas de porte 11, de telle sorte que l'organe de ramassage 2, 3 est fixe par rapport à la chambre 4 de formation de la balle.

A l'avant du châssis 1 est fixé un timon 12 par lequel la machine est attelée à un tracteur qui est relié par un arbre rotatif 13 aux différents organes de la machine qu'il est nécessaire d'entraîner et par des conduits à la centrale hydraulique de fluide sous pression alimentant les accessoires de la machine et notamment les vérins.

La machine se déplace sur le sol au moyen de deux roues 14 disposées de chaque côté de la machine. Chaque roue 14 (figure 1, 2 et 3) est montée rotative sur une fusée 15 fixée dans la partie médiane d'un bras 16 dont l'une des extrémités est montée pivotante autour d'un axe 17 sur la partie inférieure d'un montant 1a du châssis et dont l'autre extrémité est reliée par un axe d'articulation 18 à la chape d'une tige de vérin 19 dont le corps 20 est articulé autour d'un axe 21 sur le montant 1a du châssis 1, ledit axe 21 étant situé à un niveau supérieur à l'axe 17 de pivotement du bras 16 sur le montant 1a du châssis.

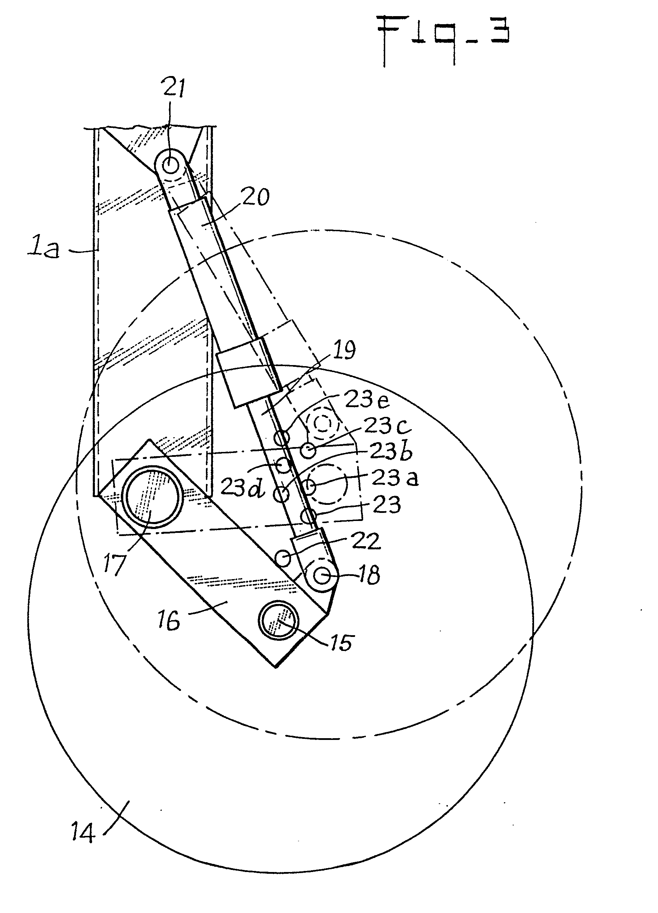

Les points de pivotement 17, 18 du bras sur le châssis et sur le vérin et le point 15 de fixation de la fusée sur le bras sont disposés aux sommets d'un triangle. Par ailleurs, le dispositif comporte également un moyen de verrouillage en position du châssis 1 et des dents 3 de l'organe de ramassage, ledit moyen comprenant une broche 22 qui est engagée dans des trous ménagés dans une face latérale du bâti (figure 3) ou d'un organe du bâti.

Dans la position représentée à la figure 3, la broche 22 est engagée dans un trou correspondant à la position de transport de la machine et le bras 16 est en butée contre la broche 22.

Les autres trous 23 et 23e correspondent à l'engagement de la broche 22 pour différentes positions de travail et des hauteurs différentes des dents 3 de l'organe de ramassage par rapport au sol.

Pour régler la hauteur H des dents 3 de l'organe de ramassage 2 en position de travail (figure 1) ou en position de transport (figure 2), on actionne les vérins hydrauliques 20 qui abaissent ou soulèvent l'ensemble de la machine.

L'organe de ramassage 2 étant fixe par rapport au rouleau porteur 10 et au rouleau de bas de porte 11, le volume d'entrée du produit à enrouler 24 est constant, ce qui assure un rendement optimal (figure 1).

Par ailleurs, l'organe de ramassage 2 étant fixe par rapport à la chambre 4 de formation de la balle, la capacité d'alimentation ne varie pas, quelle que soit la hauteur des dents 3 par rapport au sol, en position de travail (figure 1). En effet, le réglage de la hauteur H des dents s'effectue en relevant ou en abaissant par les vérins la machine complète.

Les vérins 20 sont alimentés par le circuit hydraulique du tracteur et par l'intermédiaire d'un distributeur du tracteur actionné à partir du poste de pilotage.

Lorsque le réglage de la hauteur H des dents 3 de l'organe de ramassage par rapport au sol est effectué, la position requise est verrouillée mécaniquement au moyen de la broche 22 qui est engagée dans l'un des trous 23 et 23e (figure 3).

La broche 22 de verrouillage est disposée au-dessus du bras 16 afin de permettre le soulèvement de la machine pour éviter un obstacle et ainsi ne pas endommager l'organe de ramassage. Cette opération est commandée à partir du tracteur.

Bien que la description mentionne le foin il est évident que le dispositif peut être utilisé pour tous les types de récolte.

Bien entendu, l'invention n'est pas limitative et l'homme de l'art pourra y apporter des modifications sans sortir pour cela du domaine de l'invention.

**Revendications**

1. Dispositif de relevage pour des machines destinées au ramassage et au pressage en balles rondes de tous types de récolte, ladite machine comprenant un châssis (1), une chambre (4) de formation de balles rondes définie à la partie supérieure du châssis, un rouleau porteur de balle (10) et un rouleau de bas de porte (11) montés sur le châssis (1) à la partie inférieure de la chambre de formation de balle (4), un organe de ramassage (2, 3) de foin coupé monté rotatif à la partie inférieure du châssis, le châssis étant monté sur une paire de roues (14) en contact avec le sol et situées derrière l'organe de ramassage (2, 3), caractérisé en ce que l'organe de ramassage (2, 3) est monté en position fixe par rapport au rouleau porteur (10) et au rouleau de bas de porte (11), de telle sorte que l'organe de ramassage (2, 3) est fixe par rapport à la chambre (4) de formation de balle et en ce que chaque roue (14) est montée rotative sur une fusée (15) fixée sur la partie médiane d'un bras (16) monté pivotant à une extrémité sur la partie inférieure du châssis et à l'autre extrémité à un vérin hydraulique (20), les points d'articulation du bras (16) sur le châssis (1) et sur le vérin (20) et le point de fixation de la fusée (15) sur le bras (16) étant disposés aux sommets d'un triangle, le vérin (20) étant articulé à une de ses extrémités sur le bras (16) et à son autre extrémité sur le châssis (1) au-dessus de l'axe de pivotement du bras, formant ainsi un moyen de réglage en hauteur du châssis et de l'organe de ramassage (2, 3) par rapport au sol.

2. Dispositif de relevage suivant la revendication 1, caractérisé en ce que le bras (16) portant la roue (14) est en butée contre un organe de verrouillage mécanique (22).

3. Dispositif de relevage suivant la revendication 2, caractérisé en ce que l'organe de verrouillage mécanique est constitué d'une broche (22) engagée sélectivement dans des trous (23 à 23e) du châssis (1) disposés à différentes hauteurs par rapport au sol pour correspondre aux différentes positions de travail de la machine et à au moins une position de transport sur route.

**Patentansprüche**

1. Hebevorrichtung für Maschinen zum Aufnehmen und Pressen von Erntegut in Form von Rundballen mit einem Gehäuse (1), einer Kammer (4) zum Formen der runden Ballen, im oberen Teil des Gehäuses, einer Trägerrolle für die Ballen (10) und einer am unteren Teil der Kammer zum Formen der Ballen (4) am Chassis (1) angebrachten Torrolle (11), einem Aufnehmerorgan (2, 3) für geschnittenes Heu, wobei das Organ drehbar im unteren Bereich des Gehäuses angeordnet ist und das Gehäuse auf einem Paar Rollen (14) angebracht ist, die mit dem Boden in Kontakt stehen und hinter dem Aufnehmerorgan (2, 3) angeordnet sind, dadurch gekennzeichnet, dass das Aufnehmerorgan (2, 3) in starrer Lage bezüglich der Trägerrolle (10) und der unteren Torrolle (11) angeordnet ist derart, dass das Aufnehmerorgan (2, 3) bezüglich der Kammer (4) zum Formen der Ballen starr angeordnet ist und dadurch, dass jede Rolle (14) drehbar auf einem Achsbolzen (15) auf dem Mittenteil eines Arms (16) angebracht ist, der an einem Ende an dem unteren Teil des Gehäuses schwenkbar angelenkt ist und am anderen Ende an einer hydraulischen Kolben-Zylindereinheit (20), wobei die Artikulationspunkte des Armes (16) auf dem Gehäuse (1) und auf der Kolbenzylindereinheit (20) und der Befestigungspunkt des Zapfens (15) auf dem Arm (16) an den Spitzen eines Dreiecks angeordnet sind und die Kolbenzylindereinheit (20) an einem seiner Enden an dem Arm (16) und an seinem anderen Ende am Gehäuse (1) oberhalb der Schwenkachse des Arms angelenkt ist, um somit ein Mittel zum Einstellen der Höhe des Gehäuses und des Aufnehmerorgans (2, 3) bezüglich des Bodens zu bilden.

2. Vorrichtung nach Anspruch 1, dadurch gekennzeichnet, dass der das Rad (14) tragende Arm (16) gegen ein mechanisches Verriegelungsorgan (22) anschlägt.

3. Vorrichtung nach Anspruch 2, dadurch gekennzeichnet, dass das mechanische Verriegelungsorgan aus einem Zapfen (22) besteht, der wahlweise in eines der Löcher (23 bis 23e) des Gehäuses (1) eingreift, die in verschiedenen Höhen über dem Boden angeordnet sind und verschiedenen Arbeitsstellungen der Maschine und mindestens einer Stellung für den Strassentransport entsprechen.

**Claims**

1. Lifting device for machines designed for picking up all types of crops and pressing same into round bales, said machine comprising a chassis (1), a round bale forming chamber (4) defined at the upper part of the chassis, a bale supporting roller (10) and a lower door roller (11) mounted on the chassis (1) at the lower part of the bale forming chamber (4), a picking up member (2, 3) for picking up the cut hay, which member is mounted for rotating at the lower part of the chassis, said chassis being mounted on a pair of wheels (14) in contact with the ground and situated behind the picking up member (2, 3), characterized in that the picking up member (2, 3) is fixedly mounted with respect to the supporting roller (10) and to the lower door roller (11), so that the picking-up member (2, 3) is fixed with respect to the bale forming chamber (4), and in that each wheel (14) is mounted for rotating an an axle (15) fixed on the middle part of an arm (16) mounted for pivoting by one end on the lower part of the chassis, and by the other end on a hydraulic jack (20), the points of articulation of the arm (16) on the chassis (1) and on the jack (20) and the fixing point of axle (15) on the arm (16) being situated at the apices of a triangle, jack (20) being articulated at one of its ends on arm (16) and at its other end on chassis (1) above the arm pivoting axis, thereby forming a means of adjusting the height of the chassis and of picking member (2, 3) with respect to the ground.

2. Lifting device according to claim 1, characterized in that the arm (16) supporting the wheel (14) is in abutment against a mechanical locking member (22).

3. Lifting device according to claim 2, characterized in that the mechanical locking member is constituted by a pin (22) selectively engaged in holes (23 to 23e) of the chassis (1) said holes being at different heights from the ground, in order to correspond to the various working positions of the machine and to at least one road transport position.

Fig. 1

Fig. 2

Fig. 3